Europäisches Patentamt

European Patent Office

Office européen des brevets

(11) Publication number: **0 320 917**
**A2**

## (12) EUROPEAN PATENT APPLICATION

(21) Application number: **88120921.7**

(22) Date of filing: **14.12.88**

(51) Int. Cl.⁴: **A01N 49/00 , A01N 25/34**

(30) Priority: **17.12.87 US 134286**

(43) Date of publication of application:
**21.06.89 Bulletin 89/25**

(84) Designated Contracting States:
**BE DE GB IT**

(71) Applicant: **HERCULES INCORPORATED**
**Hercules Plaza**
**Wilmington Delaware 19894(US)**

(72) Inventor: **Gillette, Paul C.**
**2905 Cross Ford Drive Arundel Apt. 3C**
**Wilmington Delaware 19808(US)**

(74) Representative: **Lederer, Franz, Dr. et al**
**Van der Werth, Lederer & Riederer**
**Patentanwälte Lucile-Grahn-Strasse 22**
**D-8000 München 80(DE)**

(54) **Method and composition for storage of plant material.**

(57) Plant material such as tobacco is protected during storage in a closed container having an inner surface comprising a film of a thermoplastic polymer that is from 0.01 to 0.2 mm thick and has incorporated in it from about 100 to 20,000 ppm of isopropyl-(E,E)-11-methoxy-3,7,11-trimethyl-2,4-dodecadienoate ("methoprene") per gram of polymer. Convection of air within the envelope carries methoprene molecules that have migrated to the surface of the film to the surface of the plant material.

EP 0 320 917 A2

# METHOD AND COMPOSITION FOR STORAGE OF PLANT MATERIAL

The invention relates to a method for protecting plant material such as tobacco during storage by exposure to the insecticide isopropyl-(E,E)-11-methoxy-3,7,11-trimethyl-2,4-dodecadienoate (methoprene).

Protection of plant material, such as tobacco, from destruction by insects such as cigarette beetles and tobacco moths during storage is an important aspect of the tobacco industry. Methods that have been proposed in an effort to minimize that destruction include spraying of stored tobacco with low levels of the growth-control agent isopropyl-(E,E)-11-methoxy-3,7,11-trimethyl-2,4-dodecadienoate, which is conventionally called methoprene and is known to prevent larval forms of the cigarette beetle and tobacco moth, for instance, from developing into normal pupae or adults; that method has been shown to provide an effective means of controlling insects, for instance, in U.S. Patent 4,666,747. However, such spraying, using 10 ppm of the active ingredient in an ethanol:water solvent, involves a relatively high cost for the quantities of active agent required. Another method suggested for general control of insects is the gradual release of pesticides and other compounds in the presence of moisture, from a thermoplastic polymer matrix also containing a so-called porosigen such as an inorganic salt, disclosed in U.S. Reissue Patent 32,356; that approach is not practical for controlling insects in stored plant material, only being appropriate, for instance, for controlling insects in moist soil or with the matrix floating in water.

There is a need for a practical method for controlling insects during packaged storage of tobacco and other plant material that uses less methoprene than the spray method, reducing both the cost of storage and the concentration of residual methoprene in the tobacco product.

According to the invention, a method for protecting plant material such as tobacco, including exposing it to methoprene and storing it in a closed container, is characterized in that an inner surface of the container comprises a film of a thermoplastic polymer that is from 0.01 to 0.2 mm thick and has incorporated in it from about 100 to 20,000 ppm of methoprene per gram of polymer.

Convection of air within the container carries methoprene molecules that have migrated to the surface of the film to the surfaces of the plant material in the container. The plant material need not be sprayed to control attack from insects, and the concentration of insect control agent required for effective insect control using the film is lower than the concentration of methoprene required to control insects using the spraying method. The invention provides a method of storing plant material other than tobacco, such as wheat or other grain, for example.

Preferably, the polymeric film constitutes the entire area of the container, and the container may conveniently be formed by wrapping a bale or other article comprising the tobacco or other plant material with the film so that all its outer surfaces are enclosed with the film.

Preferably, the polymeric film used in accordance with the invention is a polypropylene, polyethylene or a polyester film. Incorporation of the methoprene may be by conventional techniques. For instance, granules of the polymeric material may be mixed with methoprene and the mixture extruded into a thin film having the specified thickness of from 0.01 to 0.2 millimeters. Alternatively, the film may be made by casting a layer of methoprene onto a film and heating; for instance, a roll of polymer film having a coating of at least 23 mg per square meter of methoprene may be heated to 93.3°C for 30 minutes in an enclosure to cause the methoprene to migrate into the film. Preferably, cast sheets of the film are biaxially oriented to improve mechanical properties. Also, the methoprene may be introduced into the film through the use of supercritical fluid techniques.

Preferably, the polymeric film contains 0.16 to 20 mg of the methoprene per gram of the polymeric material. Optimum concentrations depend upon film thickness and storage conditions such as time and temperature. Also preferably, the film is from 0.1 to 0.2 millimeters thick.

The following examples illustrate the invention.

## Example 1

1 kilogram of polypropylene granules and 10 grams of methoprene are dry blended and fed to a film extruder. The mixture is extruded as 0.75 millimeter thick film, which is subsequently biaxially oriented to six times its original length and width at 145°C by a film stretcher. 1 kilogram of tobacco leaves are wrapped in 3.5 grams of the methoprene containing polypropylene film and stored. 1 kilogram of tobacco leaves are wrapped in 3.5 grams of polypropylene film not containing methoprene and stored. After two months, the tobacco wrapped in untreated film shows appreciable insect destruction. The tobacco wrapped in treated film shows no insect destruction.

## Example 2

1 kilogram of polypropylene granules and 5 grams of methoprene are dry blended and fed to a film extruder. The mixture is extruded as 0.1 millimeter thick film. 1 kilogram of tobacco leaves is wrapped in 17 grams of the methoprene containing polypropylene film and stored. 1 kilogram of tobacco leaves is wrapped in 17 grams of polypropylene film not containing methoprene and stored. After two months, the tobacco wrapped in film shows appreciable insect destruction. The tobacco wrapped in methoprene containing film shows no insect destruction.

## Example 3

1 kilogram of polypropylene granules and 20 grams of methoprene are mixed and fed to a film extruder. The mixture is extruded as 0.05 millimeter thick film. 1 kilogram of tobacco leaves is wrapped in 8.5 grams of the S-methoprene containing polypropylene film and stored. 1 kilogram of tobacco leaves is wrapped in 8.5 grams of polypropylene film not containing methoprene and stored. After two months, the tobacco wrapped in film shows appreciable insect destruction. The tobacco wrapped in methoprene containing film shows no insect destruction.

## Claims

1. A method for protecting plant material such as tobacco, including exposing it to methoprene and storing it in a closed container, characterized in that a film of a thermoplastic polymer that is from 0.01 to 0.2 mm thick and has incorporated in it from about 100 to 20,000 ppm of methoprene per gram of polymer is disposed as an inner surface of the container.

2. A method for protecting plant material as claimed in claim 1 further characterized in that the thermoplastic polymer is polypropylene, polyethylene, or a polyester.

3. A method for protecting plant material as claimed in claim 2 further characterized in that the thermoplastic polymer is biaxially oriented polypropylene.

4. A method for protecting plant material as claimed in claim 1, 2, or 3, further characterized in that the polymeric film contains 0.16 to 20 mg of the methoprene per gram of the polymeric material.

5. A method for protecting plant material as claimed in any of the preceeding claims, further characterized in that the film is from 0.1 to 0.2 millimeters thick

6. A method for protecting plant material as claimed in any of the preceeding claims, further characterized in that the polymeric film is disposed as the entire inner surface of the container.

7. A method for protecting plant material as claimed in any of the preceeding claims, further characterized in that the plant material is tobacco.

8. A method for protecting plant material as claimed in any of the preceeding claims, further characterized in that a bale or other article comprising the plant material is wrapped over all its outer surfaces with the film.